# EUROPEAN PATENT SPECIFICATION

(11) **EP 4 641 531 B1**
(45) Date of publication and mention of the grant of the patent: **30.09.2026**
(21) Application number: 25186890.7
(22) Date of filing: 16.08.2023
(51) Int. Cl.: G07F 17/32

(54) **GAME MONITORING SYSTEM**
SPIELÜBERWACHUNGSSYSTEM
SYSTÈME DE SURVEILLANCE DE JEU

(30) Priority: 18.08.2022 JP 2022130332
(43) Date of publication of application: 29.10.2025
(62) Document number(s) of the earlier application(s) in accordance with Art. 76 EPC: 23191606.5 / 4 325 456
(73) Proprietor: ANGEL GROUP CO., LTD., Higashiomi-shi Shiga 527-0232 (JP)
(72) Inventor: SHIGETA, Yasushi, Higashiomi-shi, Shiga, 527-0232 (JP)
(74) Representative: Bardehle Pagenberg Partnerschaft mbB Patentanwälte Rechtsanwälte

(56) References cited:
- EP-A1- 3 822 929
- WO-A1-2022/000023
- US-A1- 2018 144 166
- US-A1- 2020 273 287
- US-A1- 2021 090 379

## Description

### TECHNICAL FIELD

The present invention relates to a game monitoring system for monitoring a game.

### BACKGROUND

Previously, in a game played in a casino and the like, a game play by a player is monitored for illicitness detection, patron rating, and the like. It is possible by performing electronically all of the game, betting by the player, and settlement for the betting to grasp a result of the game, the betting by the player, a win and loss of the player, and amount thereof as electronic information.

WO 2022/085706 A1 is an example of references related to the prior art.

The prior art document US 2021/090379 A1 discloses a game table reading system for reading RFID tags at a game table used for table games.

The prior art document US 2020/273287 A1 discloses a management system for a table game that avoids the use of fraud game tokens in a gaming house in casinos and other game facilities where game tokens are used.

The prior art document WO 2022/000023 A1 discloses computer-implemented methods and computer systems for monitoring gaming activities in a gaming venue.

The prior art document EP 3 822 929 A1 discloses a game system used for a game played by placing a gaming chip on one of a plurality of betting targets laid out on a table.

The prior art document US 2018/144166 A1 discloses an inspection system and an inspecting device which are capable of inspecting a gaming chip having a radio tag embedded therein or counting the number of gaming chips.

### SUMMARY OF THE INVENTION

Similarly, in a real table game using a physical game table, playing card, and gaming chip, there is also a desire to monitor a game and grasp amounts of betting, win, loss, and the like of a player. For this purpose, in a prior game monitoring system, a movement of the gaming chip at the game table is monitored by building an RFID in the gaming chip and reading the RFID at a betting area or a chip tray of the game table, and a player is identified by that the player presents a membership card.

The present invention is defined in the independent claim. Preferred embodiments are provided by the dependent claims. The embodiments and/or examples of the following description which are not covered by the claims, are provided for illustrative purpose only and are only intended to assist the reader in understanding the present invention. However, such embodiments and/or examples which are not covered by the claims do not form part of the present invention that is solely defined by the claims. A purpose of the present invention is to provide a game monitoring system for monitoring a game in a real table game.

A game monitoring system according to a first aspect has a configuration comprising: a chip ID identifying means configured to identify, when a gaming chip to which a chip ID is given is in a predetermined area on a game table, the chip ID of the gaming chip; an imaging means configured to image a player playing a game at the game table and the gaming chip on the game table to generate an image; a player detecting means configured to detect the player from the image; a chip detecting means configured to detect the gaming chip from the image; a first associating means configured to associate the player detected by the player detecting means with a first gaming chip detected by the chip detecting means as the player who bet the first gaming chip; a second associating means configured to associate a chip ID of the first gaming chip identified by the chip ID identifying means with the player associated with the first gaming chip by the first associating means; and a recording means configured to record a pair of the chip ID of the first gaming chip and an image of the player associated with the chip ID of the first gaming chip by the second associating means.

By this configuration, with respect to the gaming chip in the predetermined area on the game table, the chip ID thereof is associated with the player who bet the gaming chip and it is recorded, and so it is possible to monitor the game in the real table game.

A game monitoring system according to a second aspect has a configuration, in the game monitoring system according to the first aspect, further comprising: a storage means configured to store the chip ID of the gaming chip and an owner thereof so as to associate them with each other; and a comparing means configured to compare an owner associated with the chip ID of the first gaming chip in the storage means with the player associated with the chip ID of the first gaming chip by the second associating means, and output, when the owner associated with the chip ID of the first gaming chip in the storage means does not match the player associated with the chip ID of the first gaming chip by the second associating means, a signal indicating a mismatch.

By this configuration, with respect to the gaming chip placed in the predetermined area on the game table, in the case where the person stored as the owner of that gaming chip does not match the person identified based on the image as the player who bet the gaming chip, it is possible to inform that matter.

A game monitoring system according to a third aspect has a configuration in which, in the game monitoring system according to the second aspect, the player is given to a player ID, the game monitoring system further comprises a player ID identifying means configured to identify a player ID of the player detected by the player detecting means, the storage means is configured to store the chip ID of the gaming chip and a player ID of the player who is the owner thereof so as to associate them with each other, and the comparing means is configured to compare a player ID of the owner associated with the chip ID of the first gaming chip in the storage means with a player ID identified by the player ID identifying means with respect to the player associated with the chip ID of the first gaming chip by the second associating means, and output, when the player ID of the owner associated with the chip ID of the first gaming chip in the storage means does not match the player ID identified by the player ID identifying means with respect to the player associated with the chip ID of the first gaming chip by the second associating means, a signal indicating a mismatch.

By this configuration, with respect to the gaming chip placed in the predetermined area on the game table, in the case where the ID of the person stored as the owner of the gaming chip does not match the ID of the person identified based on the image as the player who bet the gaming chip, it is possible to inform that matter.

A game monitoring system according to a fourth aspect has a configuration in which, in the game monitoring system according to the second aspect, the storage means is configured to store the chip ID of the gaming chip and face information of the owner thereof so as to associate them with each other, and the comparing means is configured to compare face information associated with the chip ID of the first gaming chip in the storage means with face information extracted from the image with respect to the player associated with the first gaming chip by the second associating means, and output, when the face information associated with the chip ID of the first gaming chip in the storage means does not match the face information extracted from the image with respect to the player associated with the first gaming chip by the second associating means, a signal indicating a mismatch.

By this configuration, with respect to the gaming chip placed in the predetermined area on the game table, in the case where the face information of the person stored as the owner of the gaming chip does not match the face information of the person identified based on the image as the player who bet the gaming chip, it is possible to inform that matter.

A game monitoring system according to a fifth aspect has a configuration, in the game monitoring system according to the second aspect, further comprising a controlling means configured to rewrite, when the comparing means determines that the owner associated with the chip ID of the first gaming chip in the storage means does not match the player associated with the chip ID of the first gaming chip by the second associating means, the owner associated with the chip ID of the first gaming chip in the storage means to the player associated with the chip ID of the first gaming chip by the second associating means.

By this configuration, it is possible to rewrite the owner stored in association with the chip ID of the gaming chip to the correct owner.

A game monitoring system according to a sixth aspect has a configuration, in the game monitoring system according to the second aspect, further comprising an updating means configured to rewrite an owner associated with a chip ID of a payout gaming chip paid out by a dealer in the storage means to a player associated with the payout gaming chip by the second associating means.

By this configuration, it is possible to rewrite the owner stored in association with the gaming chip paid out from the dealer to the player who received that payout gaming chip.

A game monitoring system according to a seventh aspect has a configuration, in the game monitoring system according to the second aspect, further comprising an updating means configured to rewrite an owner associated with a chip ID of a payout gaming chip paid out by a dealer in the storage means to a player associated with a first gaming chip moved from the predetermined area together with the payout gaming chip by the second associating means.

By this configuration, it is possible to rewrite the owner stored in association with the chip ID of the gaming chip paid out by the dealer to the player who bet the gaming chip which was the subject to which that gaming chip was paid out.

A game monitoring system according to an eighth aspect has a configuration in which, in the game monitoring system according to any of the first to seventh aspects, the gaming chip includes an RFID tag storing the chip ID, and the chip ID identifying means is configured to identify the chip ID of the gaming chip by reading the chip ID from the RFID tag.

By this configuration, it is possible to identify the chip ID by the RFID.

A game monitoring system according to a ninth aspect has a configuration in which, in the game monitoring system according to any of the first to eighth aspects, the gaming chip includes an expression of the chip ID on a side surface, and the chip ID identifying means is configured to identify the chip ID of the gaming chip by detecting the gaming chip from the image in which the gaming chip is imaged and decoding the chip ID on the side surface of the detected gaming chip.

By this configuration, it is possible to identify the chip ID by the expression on the side surface.

A game monitoring system according to a tenth aspect has a configuration in which, in the game monitoring system according to the first aspect, the player detecting means is configured to detect a hand of the player, and the first associating means is configured to associate, based on a positional relationship between the hand of the player detected by the player detecting means and the gaming chip detected by the chip detecting means, both of them with each other.

By this configuration, it is possible to associate the chip ID of the gaming chip with the player based on the positional relationship between the hand and the gaming chip.

A game monitoring system according to a eleventh aspect has a configuration in which, in the game monitoring system according to the first aspect, the chip ID identifying means is configured to detect a gaming chip from a first image generated by the imaging means and identify the chip ID of the detected gaming chip, the chip detecting means is configured to detect a gaming chip from a second image generated by the imaging means and different from the first image, and the second associating means is configured to identify, based on a relationship between a position of the gaming chip in the first image, detected by the chip ID identifying means and a position of the gaming chip in the second image, detected by the chip detecting means, as the first gaming chip the gaming chips in same positions.

By this configuration, it is possible to identify the gaming chips in the same positions from the two images as the same gaming chip.

A game monitoring system according to a twelfth aspect, has a configuration in which, in the game monitoring system according to the eleventh aspect, the imaging means includes a first camera configured to generate the first image and a second camera different from the first camera and configured to generate the second image, and the second associating means is configured to convert the position of the gaming chip in the first image detected by the chip ID identifying means and the position of the gaming chip in the second image detected by the chip detecting means into a common coordinate space to identify as the first gaming chip the gaming chips in the same positions.

By this configuration, it is possible by mapping the gaming chip in the one image of the two images to the other image to identify the gaming chips in the same positions as the same gaming chip.

A game monitoring system according to a thirteenth aspect has a configuration in which, in the game monitoring system according to the first aspect, the chip ID identifying means is configured to identify a position of the gaming chip whose chip ID is identified, on the game table, the chip detecting means is configured to identify a position of the gaming chip detected from the image, on the game table, and the second associating means is configured to identify, based on the position identified by the chip ID identifying means and the position identified by the chip detecting means, as the first gaming chip the gaming chips in same positions.

By this configuration, it is possible to identify the same gaming chips in the same positions as the same gaming chip based on the positions of the gaming chips on the game tables in the two images.

A game monitoring system according to a fourteenth aspect has a configuration in which, in the game monitoring system according to the first aspect, the chip ID identifying means is configured to identify timing when the gaming chip whose chip ID is identified is placed on the game table, the chip detecting means is configured to identify timing when the gaming chip detected from the image is placed on the game table, and the second associating means is configured to identify, based on the timing identified by the chip ID identifying means and the timing identified by the chip detecting means, as the first gaming chip the gaming chips placed on the game tables at the same timing.

By this configuration, it is possible to identify the gaming chip identified by the chip ID identifying means and the gaming chip identified by the chip detecting means as the same gaming chip based on the timings when the gaming chips were placed on the game tables.

### BRIEF DESCRIPTION OF DRAWINGS

FIG. 1 is a view showing a game table to which a game monitoring system according to an embodiment of the present invention is applied.
FIG. 2 is a view showing a side surface of a gaming chip according to the embodiment of the present invention.
FIG. 3 is a plan view showing the gaming chip according to the embodiment of the present invention.
FIG. 4 is a block diagram showing the game monitoring system according to the embodiment of the present invention.
FIG. 5 is a view showing an example of an association by a first associating portion according to the embodiment of the present invention.

### DESCRIPTION OF THE PREFERRED EMBODIMENTS

Embodiments of the present invention will be described below, but the embodiments described below are merely examples, and the present invention is not limited to the embodiments described below. Moreover, each element of the plurality of embodiments may be arbitrarily combined.

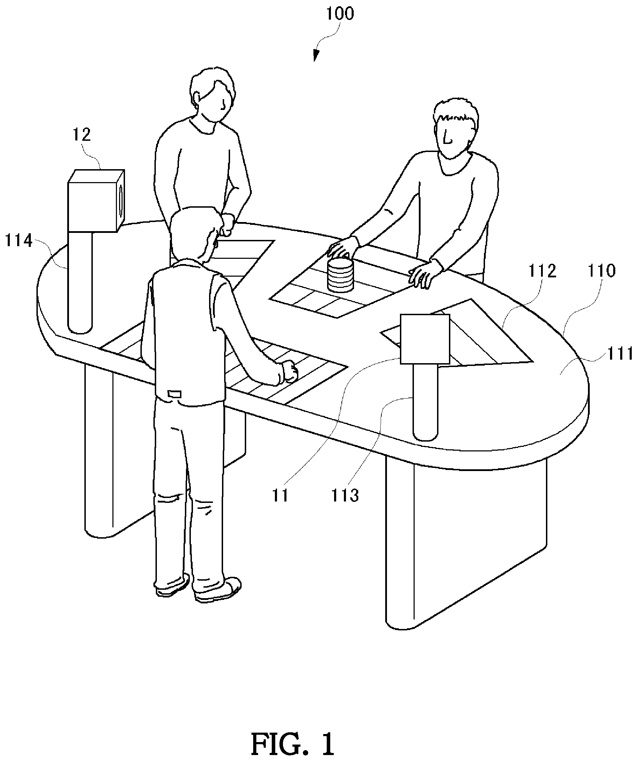

FIG. 1 is a view showing a game table to which a game monitoring system according to an embodiment of the present invention is applied. As is shown in Fig. 1, the game monitoring system 100 according to the present embodiment may be applied to a game table 110 of a casino or the like.

The game table 110 includes a generally oval-shaped table top 111. A dealer positions on the one side of the table top 111, and the opposite side of the table top 111 is provided with player positions in which a plurality of players positions. Each player position is provided with a betting area 112 for each player position. In the present embodiment, the game table 110 is a game table for baccarat. The betting area 112 includes each of betting target areas of player, banker, tie, player pair, and banker pair.

The game table 110 is installed with a first camera 11 and a second camera 12. An angle of view and direction of the first camera 11 is set such that it can image the betting areas 112, the gaming chips bet in the betting areas 112 (betting chips), and the players playing at the game table 110. An angle of view and direction of the second camera 12 are set such that it can image the betting areas 112 and the gaming chips bet in the betting areas 112 (betting chips) and such that the gaming chips is imaged larger in comparison with that in the first camera 11. The first camera 11 and second camera 12 are installed on poles 113 and 114 provided on the game table 110. For allotting imaging ranges, a plurality of first cameras 11 and plurality of second cameras 12 may be provided.

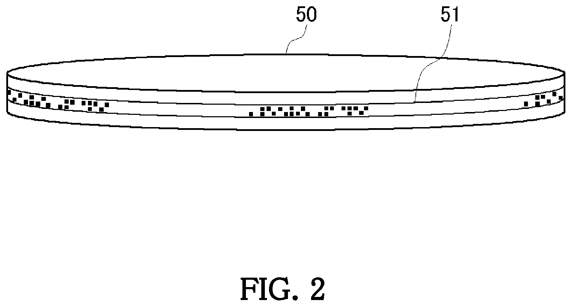

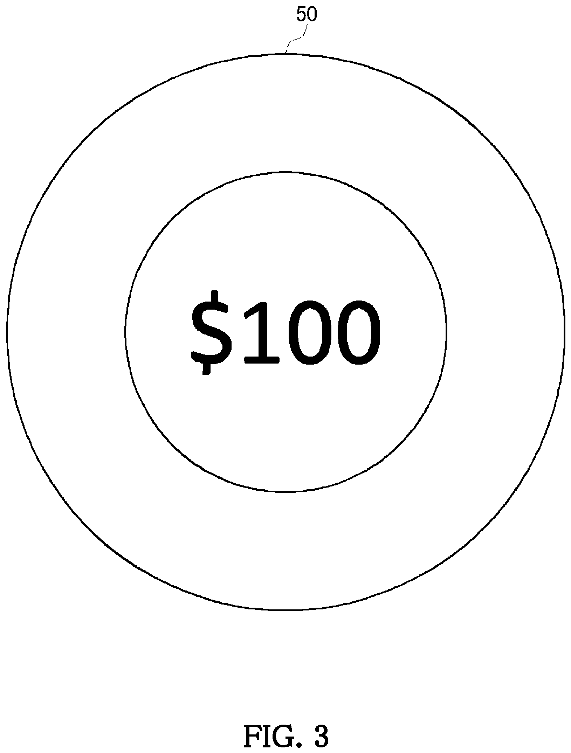

FIG. 2 is a view showing a side surface of the gaming chip according to the embodiment of the present invention, and FIG. 3 is a plan view showing the gaming chip according to the embodiment of the present invention. As is shown in FIG. 2, the side surface of the gaming chip 50 is provided with a center line 51 in the center with respect to the thickness direction. A color of the center line 51 represents a type (value) of the gaming chip 50. Therefore, it is possible to know the value of the gaming chip 50 by the color of the center line 51 by observing the side surface of the gaming chip 50.

A chip ID for identifying the gaming chip 50 is expressed on the center line 51 as code information. In the gaming chip 50 according to the present embodiment, the code information representing the chip ID is represented by presence and absence of a plurality of dots arranged in upper and lower two rows. That is, 2-bit information is represented by presence and absence of the upper and lower dots per one column, and 5-byte information is represented by a group of dots in 20 columns. The plurality of dots representing the chip ID may be printed on the side surface of the gaming chip 50 using ink that is not visible under natural light but is made visible by irradiating with infrared or ultraviolet light.

As shown in FIG. 3, on the front surface and back surface of the gaming chip 50, numbers representing the value thereof are expressed. As a matter of course, these numbers correspond to the color of the centerline on the side surface.

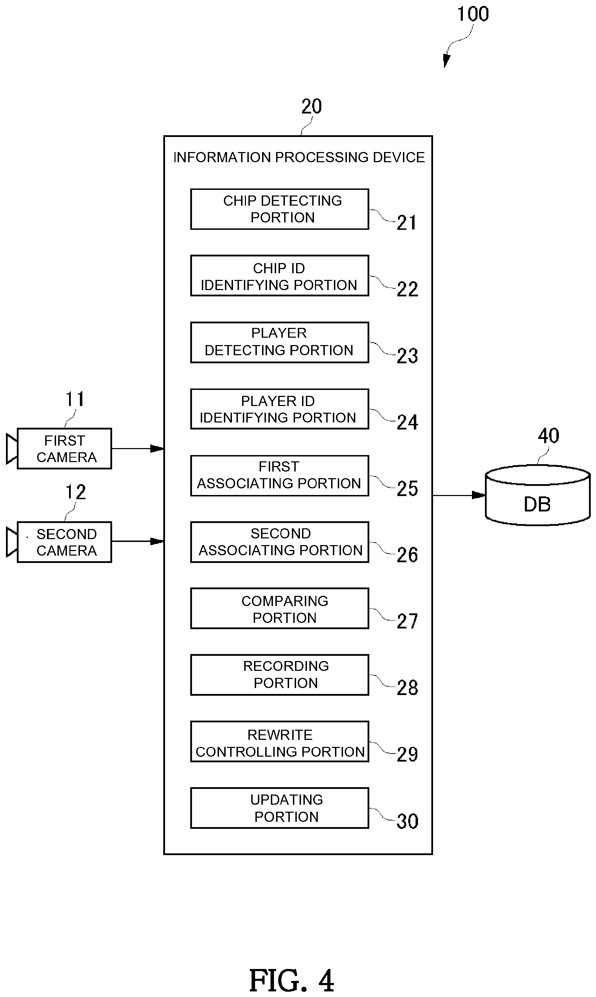

FIG. 4 is a block diagram showing the game monitoring system according to the embodiment of the present invention. In addition to the first camera 11 and second camera 12 described above, the game monitoring system 100 includes an information processing device 20 and a database 40. The first camera 11 and second camera 12 are connected with the information processing device 20 so as to be able to communicate it, respectively. The information processing device 20 is also connected with the database 40 so as to be able to communicate it.

The information processing device 20 may be provided at each game table 110, or the first camera 11 and second camera 12 provided at each of a plurality of game tables 110 may be connected to one information processing device 20. The database 40 may be provided at each of a plurality of game tables 110, or one database 40 may be provided for a plurality of game tables 110. The database 40 may also be provided in the cloud.

The first camera 11 and second camera 12 image and generate images at a timing when the player places the gaming chips 50 on the betting area 112 of the game table 110 or at a timing when the gaming chips 50 are placed on the betting area 112 and a game starts (that is, at a timing after which the gaming chips 50 is not allowed to be moved thereafter).

The information processing device 20 is a computer consisted of a memory configured to be used as a temporary storing area, a processor configured to perform operations in response to input signals according to information processing programs according to the present embodiment, and a storage device configured to store various types of data. The database 40 includes a storage device and a processor configured to perform processing such as search, update, and the like on information stored in the storage device.

The information processing device 20 has various functions shown in FIG. 4 by executing information processing program according to the present embodiment. Specifically, the information processing device 20 includes a chip detecting portion 21, a chip ID identifying portion 22, a player detecting portion 23, a player ID identifying portion 24, a first associating portion 25, a second associating portion 26, a comparing portion 27, a recording portion 28, a rewrite controlling portion 29, and an updating portion 30.

The chip detecting portion 21 obtains the image imaged to be obtained by the first camera 11 (hereinafter referred to as a "first image") and detects chip group areas containing chip groups from this first image. In a case where the gaming chips 50 to be bet on the betting area 112 of the game table 110 are stacked and placed on the betting area 112, the chip detecting portion 21 detects the area containing this stack of betting chips as the chip group area (chip stack area). Specifically, the chip detecting portion 21 detects a rectangular frame containing the chip group as the chip group area.

The chip detecting portion 21 detects chip areas corresponding to individual gaming chips from the detected chip group areas. The chip detecting portion 21 may detect the individual chip area at this time using the centerline 51 of the side surface of the gaming chip 50. That is, the chip detecting portion 21 may determine a position and size of the chip area according to a position and length of the centerline 51.

The chip ID identifying portion 22 obtains the image imaged to be obtained by the second camera 12 (hereinafter referred to as a "second image"). Then, the chip ID identifying portion 22 detects the chip group areas and chip areas from this second image as is similar to the chip detecting portion 21. The chip ID identifying portion 22 performs code recognition on the detected chip area to decode the code information of each gaming chip 50. Whereby, the chip ID identifying portion 22 identifies the chip ID of each chip area, and in this way, identifies all chip IDs contained in each chip group area. At this time, the chip ID identifying portion 22 may detect the center line 51 of the gaming chip 50 and perform the code recognition in an area of the detected center line 51.

Instead of this, the chip ID identifying portion 22 may be an RFID system configured to identify the chip IDs of the gaming chips placed in the betting area 112 by RFIDs. In this case, an RFID tag storing the chip ID of the gaming chip is built in the gaming chip. The RFID system includes antennas and readers. The antennas are embedded under the tabletop 111 at positions corresponding to respective betting areas 112. The reader is connected to the antenna and obtains the chip ID from the signal read by the antenna.

The chip detecting portion 21 identifies the position of the detected chip group area and a timing when the chip group area is detected. In addition to or instead of this, the chip ID identifying portion 22 identifies the position of the gaming chip 50 whose chip ID is identified, on the game table. The chip ID identifying portion 22 also identifies a timing when the gaming chip 50 whose chip ID is identified is placed on the game table.

The player detecting portion 23 detects the player from the first image imaged to be obtained by the first camera 11. The player detecting portion 23 detects as the player the whole including a face, an upper body, arms, and hands of the player, and also extracts a skeleton model consisted of respective key points of the face area, the upper body, the arms, and the hands of player. The player detecting portion 23 recognizes the same player's face area and skeleton model or plurality of key points consisting it as belonging to one player.

The player ID identifying portion 24 identifies a player ID by performing face recognition on the face area of the first image detected by the player detecting portion 23. The player to be identified by the player ID identifying portion 24 is registered in advance by the face image thereof and given the player ID, and the player ID identifying portion 24 determines which of the registered players the face of the face area is by using face recognition technology. In a case where the player ID identifying portion 24 does not determine that it is any of the registered players as a result of the face recognition, it determines that the player of the face area, that is, the player imaged in the player area is an unregistered player.

The player may be registered by the player ID thereof or by face information thereof. In the case where the player is registered by the player ID thereof, the player ID identifying portion 24 identifies the player ID of the player whose face area is detected from the first image. In the case where the player is registered by the face information, the player ID identifying portion 24 identifies the face information of the player whose face image is detected from the first image. Here, the face information may be a face image of the player or feature extracted from the face image of the player.

The first associating portion 25 associates the player detected by the player detecting portion 23 with the first gaming chip detected by the chip detecting portion 21 as the player who bet the first gaming chip. Specifically, the first associating portion 25 associates, based on a positional relationship between the hand of the player detected by the player detecting portion 23 and the gaming chip 50 detected by the chip detecting portion 21, both of them with each other.

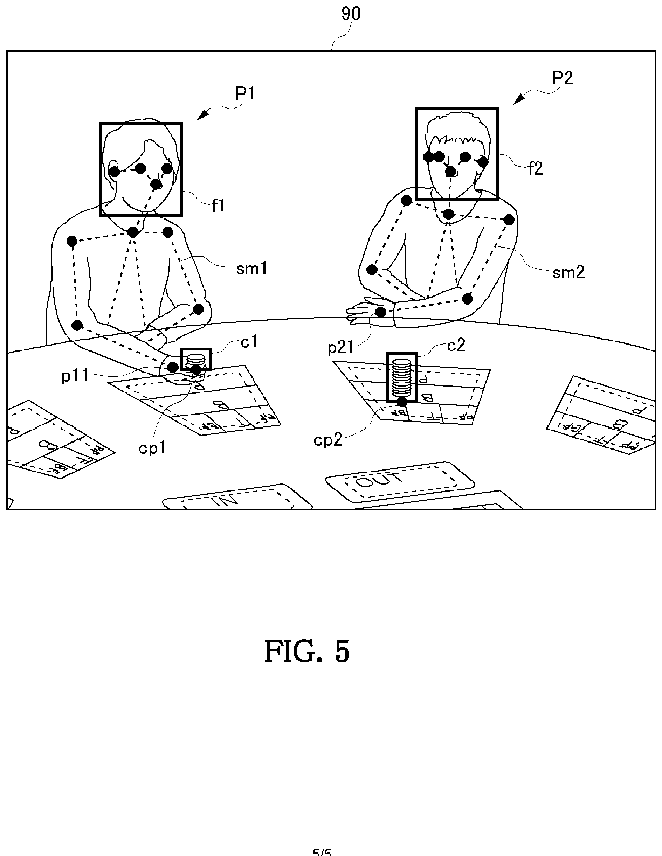

FIG. 5 is a view showing an example of the association by the first associating portion according to the embodiment of the present invention. In the present embodiment, from the same image which is the first image 90 imaged by the first camera 11, the chip detecting portion 21 detects chip group areas c1 and c2 and the player detecting portion 23 detects players P1 and P2. The first associating portion 25 determines, based on distances between the hands p11 and p21 of players P1 and P2 detected by the player detecting portion 23 and the chip group areas c1 and c2, combinations of the hands and the chip group areas, and thus combinations of the players and the chip group areas.

In the example in FIG. 5, since a distance between a basic point cp1 of the chip group area c1 and the hand p11 of the player P1 is equal to or less than a predetermined threshold, the first associating portion 25 associates this chip group area c1 with the player P1. Also, since a distance between a basic point cp2 of the chip group area c2 and the hand p21 of the player P2 is equal to or less than the predetermined threshold, the first associating portion 25 associates this chip group area c2 with the player P2. The basic point may be the center of the lower edge of the rectangular frame consisting the chip group area.

As is described above, since the player detecting portion 23 recognizes the face areas f1 and f2 and the skeleton models sm1 and sm2 including the plurality of key points of the same player as belonging to the same player, the first associating portion 25 can associate the chip group area with any of the face areas, the skeleton models, and each of the key points.

The second associating portion 26 associates the chip ID of the gaming chip 50 identified by the chip ID identifying portion 22 with the player associated with the gaming chip 50 by the first associating portion 25. Specifically, the second associating portion 26 first determines whether the gaming chip 50 detected by the chip detecting portion 21 and the gaming chip 50 detected by the chip ID identifying portion 22 and whose chip ID is identified thereby are the same. For this purpose, based on a relationship between a position of the gaming chip 50 detected by the chip ID identifying portion 22 in the first image and a position of the gaming chip 50 detected by the chip detecting portion 21 in the second image, the gaming chips 50 in the same positions are identified as the same gaming chip 50.

More specifically, the second associating portion 26 converts a position of the chip group area detected by the chip detecting portion 21 in the first image to a position in the second image, and identifies the chip group areas in the same positions as the same gaming chip 50. Alternatively, the second associating portion 26 may, instead of this, convert a position of the chip group area detected by the chip ID identifying portion 22 in the second image to a position in the first image, and identify the chip group areas in the same positions as the same gaming chip 50. Alternatively, the second associating portion 26 may convert both of a position of the chip group area detected by the chip detecting portion 21 in the first image and a position of the chip group area detected by the chip ID identifying portion 22 in the second image into a common coordinate space, and identify the chip group areas in the same positions as the same gaming chip 50.

In this way, the second associating portion 26 identifies the gaming chips 50 in the same positions as the same gaming chip 50 based on the position identified by the chip detecting portion 21 and the position identified by the chip ID identifying portion 22, but, instead of this, the second associating portion 26 may identify, based on a timing when the gaming chip is detected by the chip detecting portion 21 and a timing when the gaming chip 50 is identified by the chip ID identifying portion 22, the gaming chips 50 placed on the game tables 110 at the same timing as the same gaming chip 50.

The second associating portion 26 associates the chip ID of the gaming chip identified by the chip ID identifying portion 22 with the player associated with that gaming chip by the first associating portion 25. Specifically, in the case where the player is registered by the player ID, the second associating portion 26 associates the chip ID of the gaming chip identified by the chip ID identifying portion 22 with the player ID of the player associated with that gaming chip by the first associating portion 25. Moreover, in the player is registered by the face information, the second associating portion 26 associates the chip ID of the gaming chip identified by the chip ID identifying portion 22 with the face information of the player associated with that gaming chip by the first associating portion 25.

The recording portion 28 records a pair of the chip ID of the gaming chip 50 and an image of the player associated with the chip ID of that gaming chip 50 by the second associating portion 26. The recording portion 28 may further record the chip ID and the player ID of the player associated therewith, or the chip ID and the face information of the player associated therewith, as is described below. As is in the present embodiment, since the recording portion 28 records, in association with the chip ID identified by the chip ID identifying portion 22, not the player ID for identifying the player associated with the chip ID and but only the image of the player, personal information of the player is not recorded, and so privacy of the player is maintained.

The database 40 stores the chip ID of the gaming chip 50 and an owner so as to associate them with each other. Specifically, in the case where the player is registered by the player ID, the database 40 stores the chip ID of the gaming chip 50 and the player ID of the player who is the owner thereof so as to associate them with each other. Alternatively, in the case where the player is registered by the face information, the database 40 stores the chip ID of the gaming chip 50 and the face information of the player who is the owner thereof so as to associate them with each other.

The comparing portion 27 compares the owner associated with the chip ID of the gaming chip 50 in the database 40 with the player associated with the chip ID of that gaming chip 50 by the second associating portion 26. In a case where the owner associated with the chip ID of the gaming chip 50 in the database 40 and the player associated with the chip ID of the gaming chip 50 by the second associating portion 26 do not match, the comparing portion 27 outputs a signal indicating a mismatch.

Specifically, in the case where the player is registered by the player ID, the comparing portion 27 compares the player ID associated with the chip ID of the gaming chip 50 in the database 40 with the player ID identified by the player ID identifying portion 24 with respect to the player associated with the chip ID of that gaming chip 50 by the second associating portion 26. In this case, in a case where the play ID of the owner associated with the chip ID of the gaming chip 50 in the database 40 does not match the player ID of the player associated with the chip ID of that gaming chip 50 by the second associating portion 26, the comparing portion 27 outputs a signal indicating a mismatch.

In the case where the database 40 stores the chip ID of the gaming chip 50 and the face information of the owner thereof so as to associate them with each other, the comparing portion 27 compares, in addition to or instead of the specific example above, the face information associated with the chip ID of the gaming chip 50 in the database 40 with the face information extracted from the image with respect to the player associated with that gaming chip by the second associating portion 26. In this case, in a case where the face information associated with the chip ID of the gaming chip 50 in the database 40 does not match the face information extracted from the image with respect to the player associated with the gaming chip 50 by the second associating portion 26, the comparing portion 27 outputs a signal indicating a mismatch.

It is possible by the above functions of the comparing portion 27 to output, when the gaming chip 50 is operated on the game table 110 by the player different from the original owner for that gaming chip 50, the signal indicating the mismatch and warn such mismatch.

In the case where the comparing portion 27 determines that the owner associated with the chip ID of the gaming chip 50 in the database 40 does not match the player associated with the chip ID of that gaming chip by the second associating portion 26, the rewrite controlling portion 29 rewrites the owner associated with the chip ID of the gaming chip 50 in the database 40 to the player associated with the chip ID of that gaming chip by the second associating portion 26.

It is possible by this rewrite controlling portion 29 to, in the case where the incorrect association of the gaming chip 50 with the player is performed, correct it and perform an association with the correct player. Moreover, in a case where a chip ID not associated with any player is identified, the rewrite controlling portion 29 rewrites the player associated with that chip ID by the second associating portion 26 as the owner of that chip ID.

In a case where the player wins a game and receives a payout of the gaming chip 50 from the dealer, an owner of the gaming chip related to this payout (hereinafter referred to as a "payout gaming chip") should be changed from the dealer or a casino to the player who won the game. Then, the updating portion 30 rewrites an owner associated with a chip ID of a payout gaming chip paid out from the dealer in the database 40 to a player associated with the payout gaming chip by the second associating portion 26. For this purpose, the first camera 11 and second camera 12 perform imaging at the time of the payout of the gaming chips 50, the first associating portion 25 associates a chip group area of the payout gaming chips with a player who is trying to take the payout gaming chips, and the updating portion 30 updates the database 40 according to this association.

Alternatively, the updating portion 30 rewrites an owner associated with the chip ID of the payout gaming chip paid out from the dealer in the database 40 to a player associated with the gaming chip 50 moved from the betting area 112 together with the payout gaming chip by the second associating portion 26. Whereby, the chip ID of the payout gaming chip 50 is stored in the database 40 in association with the player ID of the player who received it.

In the case where the RFID tag storing the chip ID is built in the gaming chip 50 and the chip ID identifying portion 22 reads the chip ID from the RFID tag of the gaming chip 50 at the betting area 112, the RFID tag of the payout gaming chip may be read at the betting area 112 on which it paid out, whereby identifying that chip ID and updating a player ID which should be associated therewith.

Moreover, in the above embodiment, the first camera that generates the first image by imaging and the second camera that generates the second image by imaging are separate cameras, but they may be a single camera. In this case, this single camera generates both of the first image and the second image. Then, in this case, imaging conditions (an angle of view, resolution, imaging direction, and the like) may be changed in cases imaging the first image and imaging the second image.

As is described above, in the game monitoring system 100 according to the present embodiment, the first associating portion 25 associates the gaming chip 50 (chip stack) on the game table 110, detected from the first image by the chip detecting portion 21 with the player detected from the first image by the player detecting portion 23, and the chip ID identifying portion 22 identifies the chip ID of the gaming chip 50 based on the second image, whereby the second associating portion 26 associates the player with the chip ID. Whereby, it is possible to determine which of the players the gaming chip 50 on the game table 110 is the gaming chip 50 of, and perform a game management such as illicitness detection, patron rating, and the like.

As is described above, the method of identifying the chip ID of the gaming chip 50 on the game table 110 is not limited to that by the image, but may also be that by the RFID tag and RFID reading system. Since it is possible by the above embodiment to perform the association of the gaming chip with the player who operates that gaming chip, it is possible to determine which player bet the gaming chip based on the image, for example, in a case where the player bet the gaming chip 50 on the betting area 112 other than the betting area in front of the own player position or with respect to the gaming chip 50 bet by a back bettor who is not seated in the player positions.

In addition, the information processing device 20 may further recognize a position, type, and number of the gaming chips 50 being bet on the game table 110 based on the first or second image, or may recognize a position, type, and number of the gaming chips 50 being bet on the game table 110 by building in the gaming chips 50 the RFID tag storing at least information on the type thereof, building a plurality of antennas in the game table 110, and reading the RFID tag of the gaming chip 50.

### DESCRIPTION OF THE REFERENCE

- 100: Game monitoring system
- 110: Game table
- 111: Table top
- 112: Betting area
- 11: First camera
- 12: Second camera
- 20: Information processing device
- 21: Chip detecting portion
- 22: Chip ID identifying portion
- 23: Player detecting portion
- 24: Player ID identifying portion
- 25: First associating portion
- 26: Second associating portion
- 27: Comparing portion
- 28: Recording portion
- 29: Rewrite controlling portion
- 30: Updating portion
- 40: Database

## Claims

1. A game monitoring system (100) comprising:
a chip ID identifying means (22) configured to identify, when a gaming chip (50) to which a chip ID is given is in a predetermined area on a game table (110), the chip ID of the gaming chip (50) and further configured to identify a position of the gaming chip (50) whose chip ID is identified on the game table (110);
an imaging means configured to image a player playing a game at the game table (110) and the gaming chip (50) on the game table (110) to generate an image;
a player detecting means (23) configured to detect the player from the image;
a chip detecting means (21) configured to detect a position of the gaming chip (50) on the game table (110) from the image;
a first associating means (25) configured to associate based on the image the player detected in the image by the player detecting means (23) with a first gaming chip detected in the image by the chip detecting means (21) as the player who bet the first gaming chip;
a second associating means (26) configured to determine whether the gaming chip (50) whose chip ID is identified by the chip ID identifying means (22) and the first gaming chip detected in the image by the chip detecting means (21) are the same gaming chip based on the position identified by the chip ID identifying means (22) and the position identified by the chip detecting means (21), as gaming chips (50) in same positions, and associate the chip ID of the first gaming chip determined to be the same gaming chip with the player associated with the first gaming chip determined to be the same gaming chip by the first associating means (25);
a storage means (40) configured to store the chip ID of the gaming chip (50) and an owner thereof so as to associate them with each other; and
a comparing means (27) configured to compare an owner associated with the chip ID of the first gaming chip in the storage means (40) with the player associated with the chip ID of the first gaming chip by the second associating means (26), and output, when the owner associated with the chip ID of the first gaming chip in the storage means (40) does not match the player associated with the chip ID of the first gaming chip by the second associating means (26), a signal indicating a mismatch, wherein
the storage means (40) is configured to store the chip ID of the gaming chip (50) and face information of the owner thereof so as to associate them with each other, and
the comparing means (27) is configured to compare face information associated with the chip ID of the first gaming chip in the storage means (40) with face information extracted from the image with respect to the player associated with the first gaming chip by the second associating means (26), and output, when the face information associated with the chip ID of the first gaming chip in the storage means (40) does not match the face information extracted from the image with respect to the player associated with the first gaming chip by the second associating means (26), a signal indicating a mismatch.

2. The game monitoring system (100) according to claim 1, wherein
the player is given a player ID,
the game monitoring system (100) further comprises a player ID identifying means configured to identify a player ID of the player detected by the player detecting means (23),
the storage means (40) is configured to store the chip ID of the gaming chip (50) and a player ID of the player who is the owner thereof so as to associate them with each other, and
the comparing means (27) is configured to compare a player ID of the owner associated with the chip ID of the first gaming chip in the storage means (40) with a player ID identified by the player ID identifying means with respect to the player associated with the chip ID of the first gaming chip by the second associating means (26), and output, when the player ID of the owner associated with the chip ID of the first gaming chip in the storage means (40) does not match the player ID identified by the player ID identifying means with respect to the player associated with the chip ID of the first gaming chip by the second associating means (26), a signal indicating a mismatch.

3. The game monitoring system (100) according to claim 1, further comprising a controlling means configured to rewrite, when the comparing means (27) determines that the owner associated with the chip ID of the first gaming chip in the storage means (40) does not match the player associated with the chip ID of the first gaming chip by the second associating means (26), the owner associated with the chip ID of the first gaming chip in the storage means (40) to the player associated with the chip ID of the first gaming chip by the second associating means (26).

4. The game monitoring system (100) according to claim 1, further comprising an updating means configured to rewrite an owner associated with a chip ID of a payout gaming chip paid out by a dealer in the storage means (40) to a player associated with the payout gaming chip by the second associating means (26).

5. The game monitoring system (100) according to claim 1, further comprising an updating means configured to rewrite an owner associated with a chip ID of a payout gaming chip paid out by a dealer in the storage means (40) to a player associated with a first gaming chip moved from the predetermined area together with the payout gaming chip by the second associating means (26).

6. The game monitoring system (100) according to claim 1, wherein
the gaming chip (50) includes an RFID tag storing the chip ID, and
the chip ID identifying means (22) is configured to identify the chip ID of the gaming chip (50) by reading the chip ID from the RFID tag.

7. The game monitoring system (100) according to claim 1, wherein
the gaming chip (50) includes an expression of the chip ID on a side surface, and
the chip ID identifying means (22) is configured to identify the chip ID of the gaming chip (50) by detecting the gaming chip (50) from the image in which the gaming chip (50) is imaged and decoding the chip ID on the side surface of the detected gaming chip (50).

8. The game monitoring system (100) according to claim 1, wherein
the player detecting means (23) is configured to detect a hand of the player, and
the first associating means (25) is configured to associate, based on a positional relationship between the hand of the player detected by the player detecting means (23) and the gaming chip (50) detected by the chip detecting means (21), both of them with each other.

9. The game monitoring system (100) according to claim 1, wherein
the chip ID identifying means (22) is configured to detect a gaming chip (50) from a first image (90) generated by the imaging means and identify the chip ID of the detected gaming chip (50),
the chip detecting means (21) is configured to detect a gaming chip (50) from a second image generated by the imaging means and different from the first image (90), and
the second associating means (26) is configured to identify, based on a relationship between a position of the gaming chip (50) in the first image (90), detected by the chip ID identifying means (22) and a position of the gaming chip (50) in the second image, detected by the chip detecting means (21), as the first gaming chip the gaming chips (50) in same positions.

10. The game monitoring system (100) according to claim 9, wherein
the imaging means includes a first camera (11) configured to generate the first image (90) and a second camera (12) different from the first camera (11) and configured to generate the second image, and
the second associating means (26) is configured to convert the position of the gaming chip (50) in the first image (90) detected by the chip ID identifying means (22) and the position of the gaming chip (50) in the second image detected by the chip detecting means (21) into a common coordinate space to identify as the first gaming chip the gaming chips (50) in the same positions.

11. The game monitoring system (100) according to claim 1, wherein
the chip ID identifying means (22) is configured to identify a position of the gaming chip (50) whose chip ID is identified, on the game table (110),
the chip detecting means (21) is configured to identify a position of the gaming chip (50) detected from the image, on the game table (110), and
the second associating means (26) is configured to identify, based on the position identified by the chip ID identifying means (22) and the position identified by the chip detecting means (21), as the first gaming chip the gaming chips (50) in same positions.

12. The game monitoring system (100) according to claim 1, wherein
the chip ID identifying means (22) is configured to identify a timing when the gaming chip (50) whose chip ID is identified is placed on the game table (110),
the chip detecting means (21) is configured to identify a timing when the gaming chip (50) detected from the image is placed on the game table (110), and
the second associating means (26) is configured to identify, based on the timing identified by the chip ID identifying means (22) and the timing identified by the chip detecting means (21), as the first gaming chip the gaming chips (50) placed on the game table (110) at the same timing.

## Patentansprüche

1. Spielüberwachungssystem (100), aufweisend:
ein Chip-ID-Identifizierungsmittel (22), das konfiguriert ist, um, wenn sich ein Spielchip (50), dem eine Chip-ID gegeben ist, in einem vorbestimmten Bereich auf einem Spieltisch (110) befindet, die Chip-ID des Spielchips (50) zu identifizieren, und ferner konfiguriert ist, um eine Position des Spielchips (50), dessen Chip-ID identifiziert ist, auf dem Spieltisch (110) zu identifizieren;
ein Abbildungsmittel, das konfiguriert ist, um einen Spieler, der ein Spiel auf dem Spieltisch (110) spielt, und den Spielchip (50) auf dem Spieltisch (110) abzubilden, um ein Bild zu erzeugen;
ein Spielererfassungsmittel (23), das konfiguriert ist, um den Spieler aus dem Bild zu erfassen;
ein Chiperfassungsmittel (21), das konfiguriert ist, um eine Position des Spielchips (50) auf dem Spieltisch (110) aus dem Bild zu erfassen;
ein erstes Zuordnungsmittel (25), das konfiguriert ist, um basierend auf dem Bild den Spieler, der in dem Bild durch das Spielererfassungsmittel (23) erfasst wird, einem ersten Spielchip, der in dem Bild durch das Chiperfassungsmittel (21) erfasst wird, als den Spieler zuzuordnen, der den ersten Spielchip gesetzt hat;
ein zweites Zuordnungsmittel (26), das konfiguriert ist, um zu bestimmen, ob der Spielchip (50), dessen Chip-ID durch das Chip-ID-Identifizierungsmittel (22) identifiziert wird, und der erste Spielchip, der in dem Bild durch das Chiperfassungsmittel (21) erfasst wird, der gleiche Spielchip sind, basierend auf der Position, die durch das Chip-ID-Identifizierungsmittel (22) identifiziert wird, und der Position, die durch das Chiperfassungsmittel (21) identifiziert wird, als Spielchips (50) an gleichen Positionen, und die Chip-ID des ersten Spielchips, der als der gleiche Spielchip bestimmt wird, dem Spieler zuzuordnen, der durch das erste Zuordnungsmittel (25) dem ersten Spielchip zugeordnet ist, der als der gleiche Spielchip bestimmt wird;
ein Speichermittel (40), das konfiguriert ist, um die Chip-ID des Spielchips (50) und einen Besitzer davon zu speichern, um sie einander zuzuordnen; und
ein Vergleichsmittel (27), das konfiguriert ist, um einen Besitzer, der der Chip-ID des ersten Spielchips in dem Speichermittel (40) zugeordnet ist, mit dem Spieler zu vergleichen, der der Chip-ID des ersten Spielchips durch das zweite Zuordnungsmittel (26) zugeordnet ist, und, wenn der Besitzer, der der Chip-ID des ersten Spielchips in dem Speichermittel (40) zugeordnet ist, nicht mit dem Spieler übereinstimmt, der der Chip-ID des ersten Spielchips durch das zweite Zuordnungsmittel (26) zugeordnet ist, ein Signal auszugeben, das eine Nichtübereinstimmung anzeigt, wobei
das Speichermittel (40) konfiguriert ist, um die Chip-ID des Spielchips (50) und Gesichtsinformationen des Besitzers davon zu speichern, um sie einander zuzuordnen, und
das Vergleichsmittel (27) konfiguriert ist, um Gesichtsinformationen, die der Chip-ID des ersten Spielchips in dem Speichermittel (40) zugeordnet sind, mit Gesichtsinformationen zu vergleichen, die aus dem Bild in Bezug auf den Spieler extrahiert werden, der dem ersten Spielchip durch das zweite Zuordnungsmittel (26) zugeordnet ist, und, wenn die Gesichtsinformationen, die der Chip-ID des ersten Spielchips in dem Speichermittel (40) zugeordnet sind, nicht mit den Gesichtsinformationen übereinstimmen, die aus dem Bild in Bezug auf den Spieler extrahiert werden, der dem ersten Spielchip durch das zweite Zuordnungsmittel (26) zugeordnet ist, ein Signal auszugeben, das eine Nichtübereinstimmung anzeigt.

2. Spielüberwachungssystem (100) nach Anspruch 1, wobei
dem Spieler eine Spieler-ID gegeben wird,
das Spielüberwachungssystem (100) ferner ein Spieler-ID-Identifizierungsmittel aufweist, das konfiguriert ist, um eine Spieler-ID des Spielers zu identifizieren, der durch das Spielererfassungsmittel (23) detektiert wird,
das Speichermittel (40) konfiguriert ist, um die Chip-ID des Spielchips (50) und eine Spieler-ID des Spielers zu speichern, der der Besitzer davon ist, um sie einander zuzuordnen, und
das Vergleichsmittel (27) konfiguriert ist, um eine Spieler-ID des Besitzers, der der Chip-ID des ersten Spielchips in dem Speichermittel (40) zugeordnet ist, mit einer Spieler-ID zu vergleichen, die durch das Spieler-ID-Identifizierungsmittel in Bezug auf den Spieler identifiziert wird, der der Chip-ID des ersten Spielchips durch das zweite Zuordnungsmittel (26) zugeordnet ist, und, wenn die Spieler-ID des Besitzers, der der Chip-ID des ersten Spielchips in dem Speichermittel (40) zugeordnet ist, nicht mit der Spieler-ID übereinstimmt, die durch das Spieler-ID-Identifizierungsmittel in Bezug auf den Spieler identifiziert wird, der der Chip-ID des ersten Spielchips durch das zweite Zuordnungsmittel (26) zugeordnet ist, ein Signal auszugeben, das eine Nichtübereinstimmung anzeigt.

3. Spielüberwachungssystem (100) nach Anspruch 1, ferner aufweisend ein Steuermittel, das konfiguriert ist, um, wenn das Vergleichsmittel (27) bestimmt, dass der Besitzer, der der Chip-ID des ersten Spielchips in dem Speichermittel (40) zugeordnet ist, nicht mit dem Spieler übereinstimmt, der der Chip-ID des ersten Spielchips durch das zweite Zuordnungsmittel (26) zugeordnet ist, den Besitzer, der der Chip-ID des ersten Spielchips in dem Speichermittel (40) zugeordnet ist, auf den Spieler umzuschreiben, der der Chip-ID des ersten Spielchips durch das zweite Zuordnungsmittel (26) zugeordnet ist.

4. Spielüberwachungssystem (100) nach Anspruch 1, ferner aufweisend ein Aktualisierungsmittel, das konfiguriert ist, um in dem Speichermittel (40) einen Besitzer, der einer Chip-ID eines Auszahlungsspielchips zugeordnet ist, der von einem Dealer in dem Speichermittel (40) ausgezahlt wird, zu einem Spieler umzuschreiben, der dem Auszahlungsspielchip durch das zweite Zuordnungsmittel (26) zugeordnet ist.

5. Spielüberwachungssystem (100) nach Anspruch 1, ferner aufweisend ein Aktualisierungsmittel, das konfiguriert ist, um in dem Speichermittel (40) einen Besitzer, der einer Chip-ID eines Auszahlungsspielchips zugeordnet ist, der von einem Dealer in dem Speichermittel (40) ausgezahlt wird, zu einem Spieler umzuschreiben, der einem ersten Spielchip zugeordnet ist, der aus dem vorbestimmten Bereich zusammen mit dem Auszahlungsspielchip durch das zweite Zuordnungsmittel (26) bewegt wird.

6. Spielüberwachungssystem (100) nach Anspruch 1, wobei
der Spielchip (50) ein RFID-Tag aufweist, das die Chip-ID speichert, und
das Chip-ID-Identifizierungsmittel (22) konfiguriert ist, um die Chip-ID des Spielchips (50) durch Lesen der Chip-ID von dem RFID-Tag zu identifizieren.

7. Spielüberwachungssystem (100) nach Anspruch 1, wobei
der Spielchip (50) eine Darstellung der Chip-ID auf einer Seitenfläche aufweist, und
das Chip-ID-Identifizierungsmittel (22) konfiguriert ist, um die Chip-ID des Spielchips (50) durch Erfassen des Spielchips (50) aus dem Bild, in dem der Spielchip (50) abgebildet ist, und Decodieren der Chip-ID auf der Seitenfläche des erfassten Spielchips (50) zu identifizieren.

8. Spielüberwachungssystem (100) nach Anspruch 1, wobei
das Spielererfassungsmittel (23) konfiguriert ist, um eine Hand des Spielers zu erfassen, und
das erste Zuordnungsmittel (25) konfiguriert ist, um basierend auf einer Positionsbeziehung zwischen der Hand des Spielers, die durch das Spielererfassungsmittel (23) erfasst wird, und dem Spielchip (50), der durch das Chiperfassungsmittel (21) erfasst wird, beide einander zuzuordnen.

9. Spielüberwachungssystem (100) nach Anspruch 1, wobei
das Chip-ID-Identifizierungsmittel (22) konfiguriert ist, um einen Spielchip (50) aus einem ersten Bild (90) zu erfassen, das durch das Abbildungsmittel erzeugt wird, und die Chip-ID des erfassten Spielchips (50) zu identifizieren,
das Chiperfassungsmittel (21) konfiguriert ist, um einen Spielchip (50) aus einem zweiten Bild zu erfassen, das durch das Abbildungsmittel erzeugt wird und sich von dem ersten Bild (90) unterscheidet, und
das zweite Zuordnungsmittel (26) konfiguriert ist, um basierend auf einer Beziehung zwischen einer Position des Spielchips (50) in dem ersten Bild (90), die durch das Chip-ID-Identifizierungsmittel (22) erfasst wird, und einer Position des Spielchips (50) in dem zweiten Bild, die durch das Chiperfassungsmittel (21) erfasst wird, als den ersten Spielchip die Spielchips (50) an gleichen Positionen zu identifizieren.

10. Spielüberwachungssystem (100) nach Anspruch 9, wobei
das Abbildungsmittel eine erste Kamera (11), die konfiguriert ist, um das erste Bild (90) zu erzeugen, und eine zweite Kamera (12) aufweist, die sich von der ersten Kamera (11) unterscheidet und konfiguriert ist, um das zweite Bild zu erzeugen, und
das zweite Zuordnungsmittel (26) konfiguriert ist, um die Position des Spielchips (50) in dem ersten Bild (90), die durch das Chip-ID-Identifizierungsmittel (22) erfasst wird, und die Position des Spielchips (50) in dem zweiten Bild, die durch das Chiperfassungsmittel (21) erfasst wird, in einen gemeinsamen Koordinatenraum umzuwandeln, um die Spielchips (50) an den gleichen Positionen als den ersten Spielchip zu identifizieren.

11. Spielüberwachungssystem (100) nach Anspruch 1, wobei
das Chip-ID-Identifizierungsmittel (22) konfiguriert ist, um eine Position des Spielchips (50), dessen Chip-ID identifiziert wird, auf dem Spieltisch (110) zu identifizieren,
das Chiperfassungsmittel (21) konfiguriert ist, um eine Position des Spielchips (50), der aus dem Bild erfasst wird, auf dem Spieltisch (110) zu identifizieren, und
das zweite Zuordnungsmittel (26) konfiguriert ist, um basierend auf der Position, die durch das Chip-ID-Identifizierungsmittel (22) identifiziert wird, und der Position, die durch das Chiperfassungsmittel (21) identifiziert wird, die Spielchips (50) an den gleichen Positionen als den ersten Spielchip zu identifizieren.

12. Spielüberwachungssystem (100) nach Anspruch 1, wobei
das Chip-ID-Identifizierungsmittel (22) konfiguriert ist, um einen Zeitpunkt zu identifizieren, in dem der Spielchip (50), dessen Chip-ID identifiziert wird, auf dem Spieltisch (110) platziert wird,
das Chiperfassungsmittel (21) konfiguriert ist, um einen Zeitpunkt zu identifizieren, zu dem der Spielchip (50), der aus dem Bild erfasst wird, auf dem Spieltisch (110) platziert wird, und
das zweite Zuordnungsmittel (26) konfiguriert ist, um basierend auf dem Zeitpunkt, der durch das Chip-ID-Identifizierungsmittel (22) identifiziert wird, und dem Zeitpunkt, der durch das Chiperfassungsmittel (21) identifiziert wird, die Spielchips (50), die zu dem gleichen Zeitpunkt auf dem Spieltisch (110) platziert werden, als den ersten Spielchip zu identifizieren.

## Revendications

1. Un système de surveillance de jeu (100) comprenant :
un moyen d'identification d'ID de jeton (22) configuré pour identifier, lorsqu'un jeton de jeu (50) auquel est attribué un ID de jeton est dans une zone prédéterminée sur une table de jeu (110), l'ID de jeton du jeton de jeu (50), et configuré en outre pour identifier une position sur la table de jeu (110)du jeton de jeu (50) dont l'ID de jeton est identifié ;
un moyen d'imagerie configuré pour former une image d'un joueur jouant à un jeu à la table de jeu (110) et du jeton de jeu (50) sur la table de jeu (110) pour générer une image ;
un moyen de détection de joueur (23) configuré pour détecter le joueur à partir de l'image ;
un moyen de détection de jeton configuré pour détecter une position du jeton de jeu (50) sur la table de jeu (110) à partir de l'image ;
un premier moyen d'association (25) configuré pour associer sur la base de l'image le joueur détecté dans l'image par le moyen de détection de joueur (23) avec un premier jeton de jeu détecté dans l'image par le moyen de détection de jeton (21), comme étant le joueur qui a parié le premier jeton de jeu ;
un second moyen d'association (26) configuré pour déterminer si le jeton de jeu (50) dont l'ID de jeton est identifié par le moyen d'identification d'ID de jeton (22) et le premier jeton de jeu détecté dans l'image par le moyen de détection de jeton (21) sont ou non le même jeton de jeu, sur la base de la position identifiée par le moyen d'identification d'ID de jeton (22) et de la position identifiée par le moyen de détection de jeton (21), comme étant des jetons de jeu (50) aux mêmes positions, et associer l'ID de jeton du premier jeton de jeu dont il a été déterminé qu'il était le même jeton de jeu avec le joueur associé au premier jeton de jeu dont il a été déterminé qu'il était le même jeton de jeu par le premier moyen d'association (25) ;
un moyen de stockage (40) configuré pour stocker l'ID de jeton du jeton de jeu (50) et d'un détenteur de celui-ci de manière à les associer l'un avec l'autre ; et
un moyen de comparaison (27) configuré pour comparer un détenteur associé à l'ID de jeton du premier jeton de jeu dans le moyen de stockage (40) avec le joueur associé à l'ID de jeton du premier jeton de jeu par le second moyen d'association (26), et délivrer en sortie, lorsque le détenteur associé à l'ID de jeton du premier jeton de jeu dans le moyen de stockage (40) ne concorde pas avec le joueur associé avec l'ID de jeton du premier jeton de jeu par le second moyen d'association (26), un signal indiquant une discordance, dans lequel
le moyen de stockage (40) est configuré pour stocker l'ID de jeton du jeton de jeu (50) et une information de visage du détenteur de celui-ci de manière à les associer l'un à l'autre, et
le moyen de comparaison (27) est configuré pour comparer l'information de visage associée à l'ID de jeton du premier jeton de jeu dans le moyen de stockage (40) avec l'information de visage extraite de l'image relative au joueur associé au premier jeton de jeu par le second moyen d'association (26), et délivrer en sortie, lorsque l'information du visage associée à l'ID de jeton du premier jeton de jeu dans le moyen de stockage (40) ne concorde pas avec l'information de visage extraite de l'image relative au joueur associé au premier jeton de jeu par le second moyen d'association (26), un signal indiquant une discordance.

2. Le système de surveillance de jeu (100) selon la revendication 1, dans lequel
un ID de joueur est attribué au joueur,
le système de surveillance de jeu (100) comprend en outre un moyen d'identification d'ID de joueur configuré pour identifier un ID de joueur du joueur détecté par le moyen de détection de joueur (23),
le moyen de stockage (40) est configuré pour stocker l'ID de jeton du jeton de jeu (50) et un ID de joueur du joueur qui est le détenteur de celui-ci de manière à les associer l'un avec l'autre, et
le moyen de comparaison (27) est configuré pour comparer un ID de joueur du détenteur associé à l'ID de jeton du premier jeton de jeu dans le moyen de stockage (40) avec un ID de joueur identifié par le moyen d'identification d'ID de joueur relatif au joueur associé à l'ID de jeton du premier jeton de jeu par le second moyen d'association (26), et délivrer en sortie, lorsque l'ID de joueur du détenteur associé à l'ID de jeton du premier jeton de jeu dans le moyen de stockage (40) ne concorde pas avec l'ID de joueur identifié par le moyen d'identification d'ID de joueur relatif au joueur associé à l'ID de jeton du premier jeton de jeu par le second moyen d'association (26), un signal indiquant une discordance.

3. Le système de surveillance de jeu (100) selon la revendication 1, comprenant en outre un moyen de contrôle configuré pour réinscrire, lorsque le moyen de comparaison (27) détermine que le détenteur associé à l'ID de jeton du premier jeton de jeu dans le moyen de stockage (40) ne concorde pas avec le joueur associé avec l'ID de jeton du premier jeton de jeu par le second moyen d'association (26), le détenteur associé avec l'ID de jeton du premier jeton de jeu dans le moyen de stockage (40) pour le joueur associé avec l'ID de jeton du premier jeton de jeu par le second moyen d'association (26).

4. Le système de surveillance de jeu (100) selon la revendication 1, comprenant en outre un moyen de mise à jour configuré pour réinscrire un détenteur associé à un ID de jeton d'un jeton de jeu payé, payé par un croupier, dans le moyen de stockage (40) à un joueur associé au jeton de jeu payé, par le second moyen d'association (26).

5. Le système de surveillance de jeu (100) selon la revendication 1, comprenant en outre un moyen de mise à jour configuré pour réinscrire un détenteur associé à un ID de jeton d'un jeton de jeu payé, payé par un croupier, dans le moyen de stockage (40) à un joueur associé à un premier jeton de jeu déplacé de la zone prédéterminée en même temps que le jeton de jeu payé, par le second moyen d'association (26).

6. Le système de surveillance de jeu (100) selon la revendication 1, dans lequel
le jeton de jeu (50) comprend une étiquette RFID stockant l'ID de jeton, et
le moyen d'identification d'ID de jeton (26) est configuré pour identifier l'ID de jeton du jeton de jeu (50) par lecture de l'ID de jeton à partir de l'étiquette RFID.

7. Le système de surveillance de jeu (100) selon la revendication 1, dans lequel
le jeton de jeu (50) comprend une représentation de l'ID du jeton sur une surface latérale, et
le moyen d'identification d'ID de jeton (22) est configuré pour identifier l'ID de jeton du jeton de jeu (50) par détection du jeton de jeu (50) à partir de l'image dans laquelle est imagé le jeton de jeu (50), et décodage de l'ID de jeton sur la surface latérale du jeton de jeu détecté.

8. Le système de surveillance du jeton (100) selon la revendication 1, dans lequel
le moyen de détection de joueur (23) est configuré pour détecter une main du joueur, et
le premier moyen d'association (25) est configuré pour associer ensemble, sur la base d'une relation de position entre la main du joueur détectée par le moyen de détection de joueur (23) et le jeton de jeu (50) détecté par le moyen de détection de jeton (21), les deux l'un avec l'autre.

9. Le système de surveillance de jeu (100) selon la revendication 1, dans lequel
le moyen d'identification d'ID de jeton (22) est configuré pour détecter un jeton de jeu (50) à partir d'une première image (90) générée par le moyen d'imagerie et identifier l'ID de jeton du jeton de jeu détecté (50),
le moyen de détection de jeton (21) est configuré pour détecter un jeton de jeu (50) à partir d'une seconde image générée par le moyen d'imagerie et différente de la première image (90), et
le second moyen d'association (26) est configuré pour identifier, sur la base d'une relation entre une position du jeton de jeu (50) dans la première image (90), détectée par le moyen d'identification d'ID de jeton (22) et une position du jeton de jeu (50) dans la seconde image, détectée par le moyen de détection de jeton (21), les jetons de jeu (50) à des positions qui sont les mêmes comme étant le premier jeton de jeu.

10. Le système de surveillance de jeu (100) selon la revendication 9, dans lequel
le moyen d'imagerie comprend une première caméra (11) configurée pour générer la première image (90) et une seconde caméra (12) différente de la première caméra (11) et configurée pour générer la seconde image, et
le second moyen d'association (26) est configuré pour convertir la position dans la première image (90) du jeton de jeu (50) détectée par le moyen d'identification d'ID de jeton (22) et dans la seconde image la position du jeton de jeu (50) détectée par le moyen de détection de jeton (21), en un espace de coordonnées commun pour identifier les jetons de jeu (50) à des positions qui sont les mêmes comme étant le premier jeton de jeu.

11. Le système de surveillance de jeton (100) selon la revendication 1, dans lequel
le moyen d'identification d'ID de jeton (22) est configuré pour identifier une position sur la table de jeu (110)du jeton de jeu (50) dont l'ID de jeton est identifié,
le moyen de détection de jeton (21) est configuré pour identifier une position sur la table de jeu (110) du jeton de jeu (50) détectée à partir de l'image, et
le second moyen d'association (26) est configuré pour identifier, sur la base de la position identifiée par le moyen d'identification d'ID de jeton (22) et de la position identifiée par le moyen de détection de jeton (21), les jetons de jeu (50) à des positions qui sont les mêmes comme étant le premier jeton de jeu.

12. Le système de surveillance de jeu (100) selon la revendication 1, dans lequel
le moyen d'identification d'ID de jeton (22) est configuré pour identifier un moment auquel est placé sur la table de jeu (110), le jeton de jeu (50) dont l'ID de jeton est identifié
le moyen de détection de jeton (21) est configuré pour identifier un moment auquel est placé sur la table de jeu (110) le jeton de jeu (50) détecté à partir de l'image, et
le second moyen d'association (26) est configuré pour identifier, sur la base du moment identifié par le moyen d'identification d'ID de jeton (22) et du moment identifié par le moyen de détection de jeton (21), les jetons de jeu (50) placés sur la table de jeu (110) au même moment comme étant le premier jeton de jeu.
